# EUROPEAN PATENT SPECIFICATION

(11) **EP 3 231 913 B1**
(45) Date of publication and mention of the grant of the patent: **04.09.2019**
(21) Application number: 15866522.4
(22) Date of filing: 15.04.2015
(51) Int. Cl.: D04B 27/00, F16H 57/021, F16H 57/029, D04B 27/08

(54) **MACHINE HEAD TRANSMISSION DEVICE OF WARP KNITTING MACHINE**
MASCHINENKOPFGETRIEBEVORRICHTUNG EINER KETTENWIRKMASCHINE
DISPOSITIF DE TRANSMISSION DE TÊTE DE MACHINE DE MÉTIER À MAILLES JETÉES

(30) Priority: 09.12.2014 CN 201410744048
(43) Date of publication of application: 18.10.2017
(73) Proprietor: Changzhou Wujin Wuyang Textile Machinery Co.,Ltd., Chang Zhou, Jiangsu 213164 (CN)
(72) Inventor: WANG, Minqi, Chang Zhou Jiangsu 213164 (CN); WANG, Hanzhu, Chang Zhou Jiangsu 213164 (CN); ZHAO, Qi, Chang Zhou Jiangsu 213164 (CN); HU, Zhe, Chang Zhou Jiangsu 213164 (CN); TANG, Chongjiu, Chang Zhou Jiangsu 213164 (CN)
(74) Representative: Becker Kurig Straus
(86) International application number: PCT/CN2015/076608
(87) International publication number: WO 2016/090790

(56) References cited:
- CN-A- 101 255 633
- CN-A- 101 255 633
- CN-A- 101 285 231
- CN-A- 102 505 328
- CN-A- 104 452 079
- CN-U- 202 359 313
- CN-Y- 2 861 212
- CN-Y- 2 861 212
- US-A- 3 890 807

## Description

### Field of the Invention

The present invention relates to the field of transmission structures for warp knitting machines, and specifically discloses a head transmission device for a warp knitting machine.

### Description of the Related Art

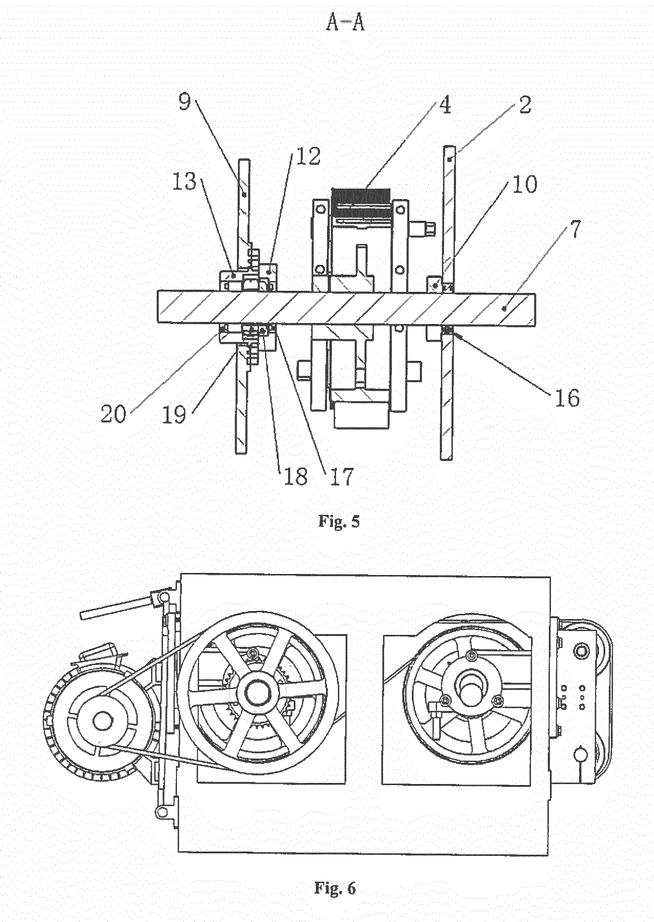

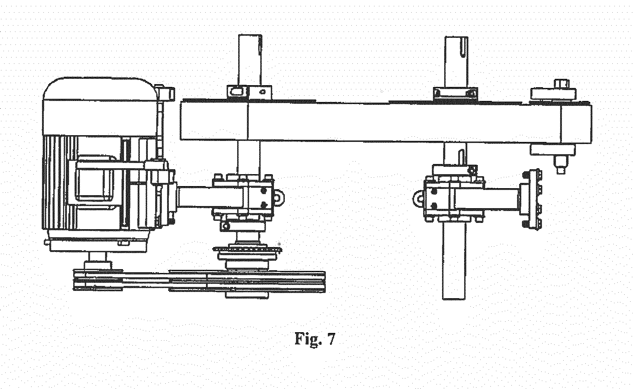

In a transmission system structures for warp knitting machines, a head end bearing housing is installed at the forefront of the head to lock the head end shaft and prevent it from axial movement, then it is a synchronous tension pulley, and lastly, it is a cover plate hole (as shown in Figs. 6 and 7). When it is necessary to maintain parts behind the head end bearing housing, such as synchronous big belt wheels, the head end bearing housing needs to be dismantled first from the head before operations can be performed. The disassembly and assembly are inconvenient and take a relatively long time.

CN 101255633 A, CN 2861212 Y, and CN 102505328 A each disclose a head transmission device according to the preamble of claim 1.

### Summary of the Invention

The object of the present invention is to overcome the problems above by providing a head transmission device for a warp knitting machine, which has a simple structure, is easy to be installed, saves time, improves the operating efficiency and saves production cost.

The technical solution employed by the present invention is provided by a head transmission device for a warp knitting machine according to claim 1. Dependent claims refer to preferred embodiments.

A head transmission device for a warp knitting machine, comprising a head body, a motor disposed at the front end of the head body, head end shafts, a synchronous big belt wheel nested on the head end shaft and a synchronous tension pulley disposed at the rear end of the head body, further comprising head end shaft fixing boards and a head end shaft middle fixing board, said head end shafts being supported by the head end shaft fixing boards and the head end shaft middle fixing board, and the head end shaft fixing boards being fixed onto the head body.

Furthermore, a bearing is provided at each connection point between the head end shafts and the head end shaft fixing boards, and a shaft washer is fixedly provided on each head end shaft and tightly attached to the inner side of the head end shaft fixing board.

Furthermore, a bearing housing is provided at each connection point between the head end shaft middle fixing board and the head end shafts and nested on the head end shafts, and the bearing housing is in cooperation with a bearing cover plate.

Furthermore, an oil seal, a bearing, an adapter sleeve and an oil seal are provided, sequentially from outside to inside, in the bearing housing and nested on the head end shaft.

In summary, the application of the above technical solution has the following advantageous effects:The present invention simplifies the structure of the transmission device, reduces the types and quantities of parts used, simplifies the transmission structure and assembly process, makes assembly less difficult, saves the assembly time, improves the operating efficiency, and at the same time, correspondingly reduces the head size, saves raw materials, and optimizes the structural layout of the head while lowering the production cost, such that the transmission structure of the head is more compact.

### Brief Description of the Drawings

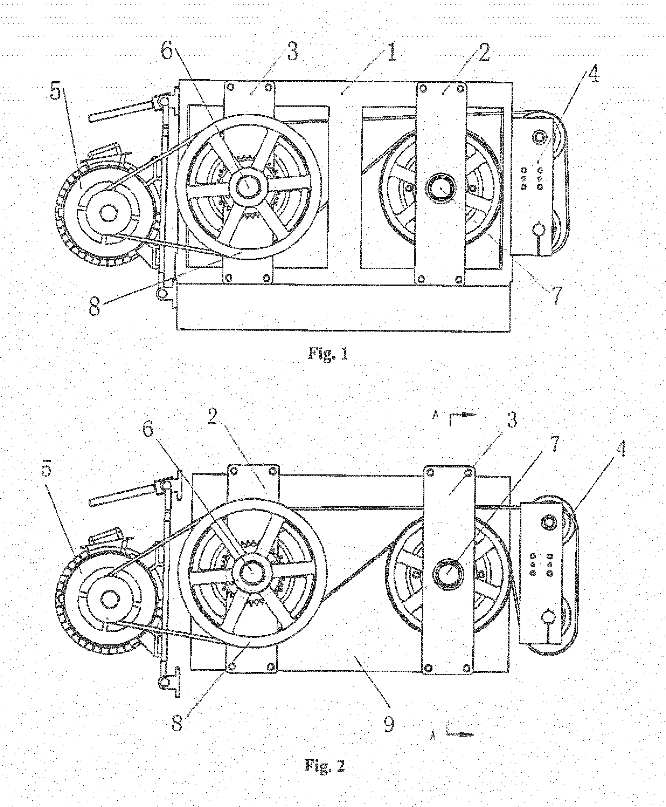

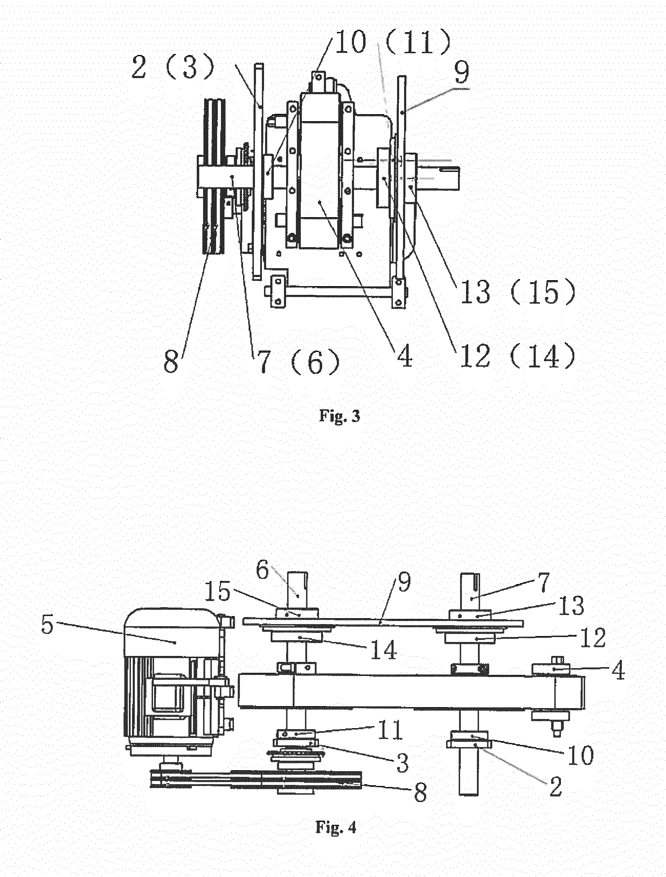

Fig. 1 is a front view of the present invention;Fig. 2 is a front view of the internal structure of the present invention;Fig. 3 is a right view of the internal structure of the present invention;Fig. 4 is a top view of the internal structure of the present invention;Fig. 5 illustrates the structure of the cross section A-A in Fig. 2;Fig. 6 is a schematic diagram of the structure of the prior art;Fig. 7 is a top view of the structure of Fig. 6.

### Detailed Description of the Specific Embodiments

The present invention will be further described below with reference to the accompanying drawings.

As shown in Figs. 1 to 5, a head transmission device for a warp knitting machine comprises a head body 1, a motor 5 disposed at
the front end of the head body 1, head end shafts 6, 7, a synchronous big belt wheel 8 nested on the head end shaft 6, and a synchronous tension pulley 4 disposed at the rear end of the head body 1, and it further comprises head end shaft fixing boards 2, 3 and a head end shaft middle fixing board 9, said head end shafts 6, 7 being supported by the head end shaft fixing boards 2, 3 and the head end shaft middle fixing board 9, the head end shaft fixing boards 2, 3 being fixed onto the head body 1 via bolts, and the head end shaft middle fixing board 9 being fixed inside the head body 1.

A bearing 16 is provided at the connection point between each head end shaft 6, 7 and the head end shaft fixing board 2, 3, and a shaft washer 10, 11 is fixedly provided on each head end shaft 6, 7 and tightly attached to the inner side of the head end shaft fixing board 2, 3, to position the head end shaft fixing board 2, 3.

A bearing housing 13, 15 is provided at each connection point between the head end shaft middle fixing board 9 and the head end shafts 6, 7 and nested on the head end shaft 6, 7, the bearing housing 13, 15 is in cooperation with a bearing cover plate 12, 14, and the bearing cover plate 12, 14 positions the bearing housing 13, 15.

An oil seal 17, a bearing 18, an adapter sleeve 19 and an oil seal 20 are provided, sequentially from outside to inside, in the bearing housing 13, 15 and nested on the head end shaft 6, 7.

The synchronous belt wheel installed on the head end shafts 6, 7 is connected to the synchronous tension pulley 4 via a synchronous belt, the tension of the synchronous belt is achieved by adjusting the center distance between two wheels of the synchronous tension pulley 4, the synchronous big belt wheel 8 is installed at the end of the head end shaft 6, and the synchronous big belt wheel 8 is connected to the motor 5 via a belt.

## Claims

1. A warp knitting machine having a head transmission device comprising a head body (1), a motor (5) disposed at the front end of the head body (1), two head end shafts (6, 7), a synchronous big belt wheel (8) installed at the end of one of the head end shafts (6) and connected to the motor (5) via a belt, a synchronous tension pulley
(4) disposed at the rear end of the head body (1), and synchronous belt wheels installed on the head end shafts (6, 7) and connected to the synchronous tension pulley (4) via a synchronous belt, **characterized in that** it further comprises head end shaft fixing boards (2, 3) and a head end shaft middle fixing board (9) on opposite sides of the synchronous belt, said head
end shafts (6, 7) each being supported by a head end shaft fixing board (2, 3) and the head end shaft middle fixing board (9), and the head
end shaft fixing boards (2, 3) being fixed onto the head body (1).

2. The warp knitting machine according to claim 1, **characterized in that** first bearings (16) are provided at the connection points between the head end shafts (6, 7) and the head end shaft fixing boards (2, 3), and a shaft washer (10, 11) is fixedly provided on each head end shaft (6, 7) and tightly attached to the inner side of the head end shaft fixing board (2, 3).

3. The warp knitting machine according to claim 1, **characterized in that** a bearing housing (13,
15) is provided at each connection point between the head end shaft middle fixing board (9) and the head end shafts (6, 7) and nested on the head end shafts (6, 7), and the bearing housing (13, 15) is in cooperation with a bearing cover plate (12, 14).

4. The warp knitting machine according to claim 3, **characterized in that** a first oil seal (17), a second bearing (18), an adapter sleeve (19) and a second oil seal (20) are provided, sequentially from outside to inside, in the bearing housing (13, 15) and nested on the head end shaft (6, 7) .

## Patentansprüche

1. Kettenwirkmaschine mit einer Kopfübertragungsvorrichtung, die ein Kopfgehäuse (1), einen am vorderen Ende des Kopfgehäuses (1) angeordneten Motor (5), zwei Kopfendwellen (6, 7), ein am Ende einer der Kopfendwellen installiertes und über einen Riemen mit dem Motor (5) verbundenes synchrones großes Riemenrad (8), eine am hinteren Ende des Kopfgehäuses (1) angeordnete Synchronspannrolle (4) und auf den Kopfendwellen (6, 7) installierte und mit der Synchronspannrolle (4) über einen Synchronriemen verbundene Synchronriemenräder umfasst, **dadurch gekennzeichnet, dass** sie ferner Kopfendwellenfixierungsplatten (2, 3) und eine Kopfendwellenmittelfixierungsplatte (9) auf gegenüberliegenden Seiten des Synchronriemens umfasst, wobei die Kopfendwellen (6, 7) jeweils von einer Kopfendwellenfixierungsplatte (2, 3) und der Kopfendwellenmittelfixierungsplatte (9) getragen werden und die Kopfendwellenfixierungsplatten (2, 3) auf dem Kopfgehäuse(1) befestigt sind.

2. Kettenwirkmaschine nach Anspruch 1, **dadurch gekennzeichnet, dass** an den Verbindungspunkten zwischen den Kopfendwellen (6, 7) und den Kopfendwellenfixierungsplatten (2, 3) erste Lager (16) angebracht sind und eine Wellenscheibe (10, 11) fest an jeder Kopfendwelle (6, 7) und fest an der Innenseite der Kopfendwellenfixierungsplatte (2, 3) angebracht ist.

3. Kettenwirkmaschine nach Anspruch 1, **dadurch gekennzeichnet, dass** an jeder Verbindungsstelle zwischen der Kopfendwellenmittelfixierungsplatte (9) und den Kopfendwellen (6, 7) ein Lagergehäuse (13, 15) vorgesehen und auf die Kopfendwellen (6, 7) verschachtelt ist, und das Lagergehäuse (13, 15) mit einer Lagerabdeckplatte (12, 14) zusammenwirkt.

4. Kettenwirkmaschine nach Anspruch 3, **dadurch gekennzeichnet, dass** eine erste Öldichtung (17), ein zweites Lager (18), eine Adapterhülse (19) und eine zweite Öldichtung (20) nacheinander von außen nach innen im Lagergehäuse (13, 15) vorgesehen und auf der Kopfendwelle (6, 7) verschachtelt sind.

## Revendications

1. Machine de métier à mailles jetées comportant un dispositif de transmission de tête comprenant un corps de tête (1), un moteur (5) disposé à l'extrémité avant du corps de tête (1), deux arbres d'extrémité de tête (6, 7), une grosse roue à courroie synchrone (8) installée à l'extrémité d'un des arbres d'extrémité de tête et connectée au moteur (5) par l'intermédiaire d'une courroie, une poulie à tension synchrone (4) disposée à l'extrémité arrière du corps de tête (1), et des roues à courroie synchrones installées sur l'arbre extrémité de tête (6, 7) et connectées à la poulie à tension synchrone (4) par l'intermédiaire d'une courroie synchrone,
**caractérisée en ce qu'**elle comprend en outre des plaques de fixation d'arbres d'extrémité de tête (2, 3) et une plaque de fixation centrale d'arbres d'extrémité de tête (9) sur des faces opposées de la courroie synchrone, lesdits arbres d'extrémité de tête (6, 7) étant chacun supporté par une plaque de fixation d'arbre d'extrémité de tête (2, 3) et par la plaque de fixation centrale d'arbres d'extrémité de tête (9), et les plaques de fixation d'extrémité de tête (2, 3) étant fixées sur le corps de tête (1).

2. Machine de métier à mailles jetées selon la revendication 1, **caractérisée en ce que** des premiers paliers (16) sont prévus au point de connexion entre l'arbre d'extrémité de tête (6, 7) et les plaques de fixation d'extrémité de tête (2, 3), et qu'une rondelle d'arbre (10, 11) est prévue fixement sur chaque extrémité de tête (6, 7) et rattachée étroitement à la face intérieure de la plaque de fixation d'arbre d'extrémité de tête (2, 3).

3. Machine de métier à mailles jetées selon la revendication 1, **caractérisée en ce qu'**il est prévu un logement de palier (13, 15) à chaque point de connexion entre la plaque de fixation centrale d'arbres d'extrémité de tête (9) et l'arbre d'extrémité de tête (6, 7) et qu'il est emboîté sur l'arbre d'extrémité de tête (6, 7), et que le logement de palier (13, 15) coopère avec une plaque de recouvrement de palier (12, 14).

4. Machine de métier à mailles jetées selon la revendication 1, **caractérisée en ce qu'**un premier joint d'étanchéité à l'huile (17), un second palier (18), un manchon adaptateur (19) et un second joint d'étanchéité à l'huile (20) sont prévus, séquentiellement de l'extérieur vers l'intérieur, dans le logement de palier (13, 15) et emboîtés sur l'arbre d'extrémité de tête (6, 7).
